# EUROPÄISCHE PATENTSCHRIFT

(11) **EP 0 561 840 B1**
(45) Veröffentlichungstag und Bekanntmachung des Hinweises auf die Patenterteilung: **24.08.1994**
(21) Anmeldenummer: 91920766.2
(22) Anmeldetag: 29.11.1991
(51) Int. Cl.: B62D 25/04, B62D 29/00

(54) **MITTELSÄULE AN EINER KAROSSERIE EINES PERSONENKRAFTWAGENS**
CENTRAL PILLAR FOR THE BODYWORK OF A PASSENGER CAR
COLONNE CENTRALE D'UNE CARROSSERIE DE VEHICULE DE TOURISME

(30) Priorität: 20.12.1990 DE 4040980
(43) Veröffentlichungstag der Anmeldung: 29.09.1993
(73) Patentinhaber: AUDI AG, 85002 Ingolstadt (DE)
(72) Erfinder: WINTER, Karin, D-8074 Gaimersheim (DE); ENNING, Norbert, D-8071 Denkendorf (DE); KLAGES, Ulrich, D-8070 Ingolstadt (DE); REITER, Karl, D-8071 Lenting (DE); SCHMOLKE, Klaus, D-8071 Hepberg (DE)
(74) Vertreter: Engelhardt, Harald
(86) Internationale Anmeldenummer: EP9102264
(87) Internationale Veröffentlichungsnummer: WO9211158

(56) Entgegenhaltungen:
- EP-A- 0 303 431
- WO-A-90/14981
- GB-A- 575 601
- GB-A- 737 655
- US-A- 2 192 075
- US-A- 2 197 644
- PATENT ABSTRACTS OF JAPAN vol. 8, 154 (M-310)(1591) 18 July 1984 & JP,A, 59 050 938 (YOSHIDA) 24 March 1984

## Beschreibung

Die Erfindung betrifft eine Mittelsäule (B-Pfosten) an einer Karosserie eines Personenkraftwagens nach dem Oberbegriff des Anspruchs 1.

Übliche selbsttragende Fahrzeugkarosserien für Personenkraftwagen sind, einschließlich der Tragstruktur, aus Blechteilen hergestellt. Träger mit Hohlprofilen werden dabei aus jeweils wenigstens zwei tiefgezogenen und miteinander verschweißten Blechen hergestellt. Solche Träger werden auch als Mittelsäulen verwendet (US-A-2 192 075). Die Mittelsäulen haben eine wesentliche Funktion in der Tragstruktur für die Steifigkeit der Fahrgastzelle und müssen, insbesondere bei einem Seitencrash, hohen Belastungen standhalten können. Aufgrund der an solche Mittelsäulen gestellten Anforderungen ist ein sich nach oben verjüngender, konischer Querschnitt vorzusehen, bei dem ein Türdichtungsflansch als Anlagefläche über die gesamte Länge ausgeführt werden soll. Weiter müssen für Türscharniere und Schließbolzen Freiräume vorhanden sein. Bei der herkömmlichen Ausführung als Blechkonstruktion ist es möglich, neben einem solchen konischen Querschnitt alle Freiräume in die Mittelsäule zu integrieren. Bei einer zweischaligen Blechkonstruktion reicht jedoch die Festigkeit nicht aus, um Fahrzeuginsassen bei einem Seitencrash hinreichend zu schützen, so daß aus diesem Grund mit mehreren, Zusätzlichen Blechteilen umfangreiche und aufwendige Verstärkungsmaßnahmen erforderlich sind.

Die zum Aufbau solcher selbsttragenden Karosserien verwendeten Stahlbleche werden im Tiefziehverfahren verformt. Die Preßwerkzeuge zum Verformen der Bleche sind verhältnismäßig teuer, lassen jedoch hohe Stückzahlen zu, so daß für eine Großserienfertigung damit eine kostengünstige Lösung zur Verfügung steht. Aufgrund der hohen Werkzeuginvestitionen gestaltet sich das beschriebene Verfahren für Kleinserien jedoch sehr kostenintensiv.

Es ist daher insbesondere für Kleinserien bekannt (EP 0 146 716 B1), Fahrzeugkarosserien für Personenkraftwagen mit einer Tragstruktur aus Hohlprofilen herzustellen, welche durch Knotenelemente miteinander verbunden sind. Die Hohlprofile sind dabei als Leichtmetall-Strangprofile und die Knotenelemente als Leichtmetall-Gußteile ausgebildet. Neben einer kostengünstigeren Lösung für Kleinserien werden mit einer solchen Konstruktion vorteilhaft auch geringere Karosseriegewichte und Verbesserungen beim Korrosionsschutz erreicht. In der konkret beschriebenen Ausführungsform nach diesem Stand der Technik ist die Mittelsäule, welche sich zwischen einem Strangprofil als Dachrahmenseitenteil und einem Schweller erstreckt, aus Blechteilen hergestellt. Der Grund dafür liegt darin, daß für Bauteile mit veränderlichem Querschnitt, das heißt hier für die konisch verlaufende Mittelsäule, die Verwendung von Strangprofilen nicht üblich ist, da diese bedingt durch ihre Herstellungsart einen über ihre Länge konstanten Querschnitt aufweisen.

Es ist eine rahmenförmige Tragkonstruktion für Fahrzeuge bekannt (PATENT ABSTRACTS OF JAPAN, vol. 8, no. 154 (M-310) (1591) 18. Juli 1984 & JP-A-59 050 938 (YOSHIDA) 24. März 1984), bei dem Mehrkammerstrangprofile verwendet sind, die über schmale Kammerschlitze im Herstellzustand zusammenhängen. Zur Herstellung eines Trägerverbunds mit sich verzweigenden Trägerteilen werden die Außenwände der Kammerschlitze über bestimmte Längsbereiche aufgetrennt und die dann frei nebeneinanderliegenden Hohlprofile relativ zueinander gebogen. Die Hohlprofile hängen dadurch an den nicht aufgeschnittenen Stellen zusammen, so daß dadurch aufwendige und bei Leichtmetallen teilweise problematische Schweißverbindungen oder Klebeverbindungen entfallen können. Es werden somit aus einem Mehrkammerstrangprofil mehrere, sich verzweigende Träger hergestellt. Für die Herstellung einer Türsäule eines Fahrzeugs ist jedoch nur ein Türsäulenträger ohne Verzweigung erforderlich, der in seinem Längsverlauf einen sich nach oben konisch verjüngenden Verlauf aufweist.

Weiter ist ein Strangprofilstab zur Herstellung eines Aufbaus für einen Omnibus bekannt (GB-A-575 601), bei dem zu beiden Seiten einer Profilkammer Flansche angeformt sind. Diese Flansche werden im Bereich von Fensteröffnungen weggeschnitten. Ein insgesamt konischer Verlauf des Strangprofils wird damit nicht erreicht.

Weiter ist ein Rahmenteil für eine Kraftfahrzeugkarosserie bekannt (WO-A-9 014 981), mit dem ein vorgeformtes Blechteil verbunden ist, das das Strangprofil teilweise übergreift, mit diesem einen Hohlraum einschließt und an die Außenkontur des Kraftfahrzeugs angepaßt ist. Ein konischer Verlauf kann hier jedoch nicht über das über seine Länge im Querschnitt gleichbleibende Strangprofil, sondern über das damit verbundene Blechteil, realisiert werden.

Aufgabe der Erfindung ist es, eine Mittelsäule zu schaffen, deren konischer Verlauf mit einem Strangprofil aus Leichtmetall realisierbar ist.

Diese Aufgabe wird mit den Merkmalen des Anspruchs 1 gelöst.

Gemäß Anspruch 1 weist die Mittelsäule ein sich über deren gesamte Länge erstreckendes Mehrkammerstrangprofil aus Leichtmetall auf, mit mehreren Profilkammern. Diese sind auf einer gemeinsamen Basisprofilwand angeordnet. Zur Herstellung eines konischen Verlaufs der Mittelsäule und/oder zur Herstellung von Ausschnitten ist wenigstens eine Profilkammer beschnitten, wobei die Basisprofilwand bei einem Beschnitt als Innenwand der Mittelsäule erhalten bleibt.

Durch den Beschnitt einer Profilkammer wird somit der, insbesondere für Personenwagen erforderliche, konisch sich nach oben verjüngende Verlauf einer Türsäule mit einfachen Mitteln und insbesondere ohne tragende Zusatzteile, möglich.

Bei der Ausführung der Mittelsäule als Strangprofil mit beschnittenen Profilkammern wird mit der einstückigen, von oben nach unten zumindest bei einer Profilkammer durchgehenden Hohlprofilsausbildung eine hohe Festigkeit erreicht, die die Anforderungen nach einem wirksamen Insassenschutz bei einem Seitencrash erfüllt. Die erforderliche, große Länge einer Mittelsäule ist als ein Bauteil herstellbar, wobei die geeignete Gestalt, insbesondere der konische Verlauf, auf einfache Art zu erhalten ist. Die Herstell- und Fertigungskosten sind dabei relativ gering. Freiräume für Anbauteile, wie Schließbolzen und Türscharniere, können ebenfalls einfach als Ausschnitte in den Profilkammern ausgeführt werden. Ein weiterer Vorteil besteht darin, daß durch Steifigkeitssprünge entlang der Mittelsäule, wie sie beim Beschneiden entstehen, dem Profil bei Belastung das Einbeulen bzw. Auswölben an bestimmten, unkritischen Stellen vorgegeben werden kann.

Ein Beschnitt der Profilkammer erfolgt bevorzugt nach Anspruch 2 derart, daß die Profilkammern des Mehrkammerstrangprofils nebeneinander angeordnet sind und daß zur Herstellung eines von der Fahrzeugseite her gesehen konischen, sich nach oben verjüngenden Verlaufs der Mittelsäule seitlich aufeinanderfolgende Profilkammern in der Längserstreckung abgestuft beschnitten sind. Eine seitlich am weitesten außen liegende Profilkammer kann dabei in einem weit unteren Bereich beschnitten sein, so daß sie nur von unten her ein Stück nach oben ragt, eine angrenzende, nächste Profilkammer ist dann etwas weiter oben zur Mitte hin beschnitten, usw.

Um auch einen konischen Verlauf in Fahrzeuglängsrichtung gesehen realisieren zu können, wird mit Anspruch 3 vorgeschlagen, Profilkammern des Mehrkammerstrangprofils übereinander anzuordnen und diese in der Längserstreckung ebenfalls abgestuft zu beschneiden. Dazu wird beispielsweise die am weitesten außen liegende Profilkammer in einem unteren Bereich beschnitten, so daß sie sich nur in diesem unteren Bereich erstreckt, die darunterliegende Profilkammer wird dann etwas weiter oben beschnitten, usw.

Die Schnittflächen für den Profilkammerbeschnitt werden zweckmäßig schräg und dem konischen Verlauf angepaßt ausgeführt.

Ein über die gesamte Länge der Mittelsäule durchgehender Türdichtungsflansch als an die Türkontur angepaßte Anlagefläche wird auf einfache Weise mit den Merkmalen des Anspruchs 4 erhalten. Dazu ist die Basisprofilwand als einwandiges Seitenteil im Herstellzustand des Strangprofils seitlich über den Bereich der Profilkammern hinaus vorstehend ausgeführt. Dieses einwandige Seitenteil kann dann einfach nach oben konisch verlaufend beschnitten werden.

Eine weitere Anpassung des Strangprofils an den Verlauf der Außenkontur der Karosserie wird nach Anspruch 5 dadurch erreichbar, daß das Strangprofil in an sich bekannter Weise insgesamt nach der Herstellung oder nach dem Beschnitt etwas gebogen wird.

Durch den Beschnitt der Profilkammern sind diese an den Beschnittflächen offen. Es wird daher mit Anspruch 6 vorgeschlagen, wenigstens im Bereich der beschnittenen Profilkammern ein Zusatzteil als Verkleidungsteil anzubringen. Bevorzugt ist hier ein Blechteil oder Gußteil, ggfs. auch ein Kunststoffteil, vorzusehen, wobei eine Verbindung mit dem Strangprofil eine zusätzliche Vergrößerung der Steifigkeit bringt.

Nach Anspruch 7 kann das Zusatzteil als Blechteil oder, in einer sehr stabilen Ausführung, als Gußteil aus Leichtmetall ausgeführt sein. Durch ein hoch belastbares Gußteil im unteren Bereich der Mittelsäule wird dieser bei einem Seitencrash besonders gefährdete Bereich vorteilhaft versteift.

Freiräume für Anbauteile, insbesondere für Scharniere und Schließbolzen, können nach Anspruch 8 vorteilhaft, ggfs. ohne weitere Bearbeitung des Strangprofils, im Zusatzteil enthalten sein. Diese Freiräume sind sowohl in einem Gußzusatzteil als auch in einem Blechzusatzteil einformbar.

Anhand der Zeichnung wird ein Ausführungsbeispiel der Erfindung mit weiteren Einzelheiten, Merkmalen und Vorteilen näher erläutert.

Es zeigen
- Fig. 1: ein Mehrkammerstrangprofil für eine Mittelsäule nach der Herstellung und nach einer Biegung und
- Fig. 2: das Mehrkammerstrangprofil nach Fig. 1 nach einem Beschnitt von Profilkammern zur Herstellung eines konischen Verlaufs mit Ausschnitten.

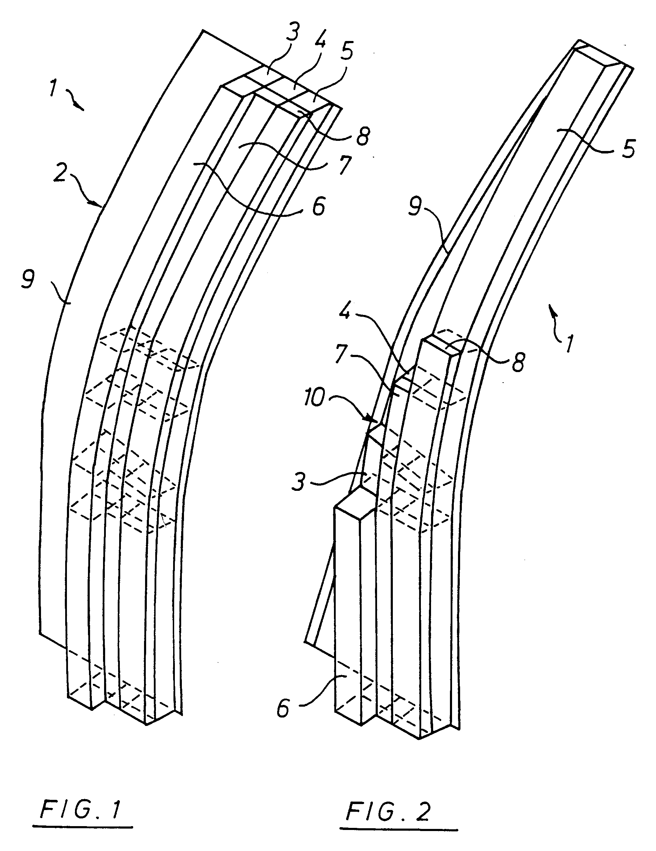

In Fig. 1 ist ein Mehrkammerstrangprofil 1 für eine Mittelsäule an einer Karosserie eines Personenkraftwagens dargestellt. Das Mehrkammerstrangprofil 1 besteht aus einer Basisprofilwand 2 (Materialstärken sind der Übersichtlichkeit halber nicht eingezeichnet), drei nebeneinanderliegenden Profilkammern über der Basisprofilwand 2 und weiteren drei Profilkammern 6, 7, 8, die über den Profilkammern 3, 4, 5 angeordnet sind und von diesen durch Stege getrennt sind. Die Basisprofilwand 2 steht als einwandiges Seitenteil 9 mit relativ großer Breite seitlich über den Bereich der Profilkammern vor.

Das Mehrkammerstrangprofil 1 nach Fig. 1 ist nach der Herstellung bereits dem Verlauf der Fahrzeugkarosserie angepaßt in einer geeigneten Vorrichtung gebogen.

Zur Herstellung eines konischen Verlaufs einer Mittelsäule mit einem größeren Querschnitt im unteren Bereich des Schwellers und einem geringeren Querschnitt im Bereich des Dachrahmens werden die Profilkammern 3 bis 8 abgestuft beschnitten, wie dies in Fig. 2 dargestellt ist. Die Profilkammer 5 bleibt dabei über die ganze Länge erhalten, während beispielsweise die Profilkammern 3 und 6 in einem unteren Bereich bereits in ihrer Höhe beschnitten sind. Durch geeigneten Beschnitt der Kammern 4 und 7 ist im Bereich 10 ein Freiraum zur Aufnahme eines Schließbolzens geschaffen.

Das Seitenteil 9 der Basisprofilwand 2 ist ebenfalls mit einem konischen Verlauf über seine ganze Länge beschnitten, wodurch ein durchgehender Türdichtungsflansch als Anlagefläche über die gesamte Länge geschaffen ist.

Die in Fig. 2 gezeigten, abgestuften Schnitte können auch mit schrägen, dem konischen Verlauf folgenden Schnittflächen, ausgeführt sein. Zudem sind zumindest die Beschnittbereiche mit einem (nicht dargestellten) Abdeckteil zu verkleiden.

## Patentansprüche

1. Mittelsäule (B-Pfosten) an einer Karosserie eines Personenkraftwagens,
dadurch gekennzeichnet,
daß die Mittelsäule ein sich über deren gesamte Länge erstreckendes Mehrkammerstrangprofil (1) aus Leichtmetall mit mehreren Profilkammern (3 bis 8) aufweist,
daß die Profilkammern (3 bis 8) auf einer gemeinsamen Basisprofilwand (2) angeordnet sind,
daß zur Herstellung eines konischen Verlaufs der Mittelsäule und/oder zur Herstellung von Ausschnitten (10) wenigstens eine Profilkammer (3 bis 8) beschnitten ist, wobei die Basisprofilwand (2) bei einem Beschnitt als Innenwand der Mittelsäule erhalten bleibt.

2. Mittelsäule nach Anspruch 1, dadurch gekennzeichnet, daß die Profilkammern (3, 4, 5) des Mehrkammerstrangprofils (1) nebeneinander angeordnet sind und zur Herstellung eines von der Fahrzeugseite her gesehen konisch sich nach oben verjüngenden Verlaufs der Mittelsäule seitlich aufeinanderfolgende Profilkammern (3, 4, 5) in der Längserstreckung abgestuft beschnitten sind.

3. Mittelsäule nach Anspruch 2, dadurch gekennzeichnet, daß die Profilkammern (6, 7, 8) des Mehrkammerstrangprofils (1) übereinander angeordnet sind und zur Herstellung eines in Fahrzeuglängsrichtung gesehenen, sich konisch nach oben verjüngenden Verlaufs der Mittelsäule übereinanderliegende Profilkammern (6, 7, 8) in der Längserstreckung abgestuft beschnitten sind.

4. Mittelsäule nach einem der Ansprüche 1 bis 3, dadurch gekennzeichnet, daß die Basisprofilwand (2) als einwandiges Seitenteil (9) im Herstellzustand des Mehrkammerstrangprofils (1) seitlich über den Bereich der Profilkammern (3 bis 8) vorsteht und konisch sich nach oben verjüngend beschnitten ist.

5. Mittelsäule nach einem der Ansprüche 1 bis 4, dadurch gekennzeichnet, daß das Mehrkammerstrangprofil (1) nach der Herstellung oder dem Beschnitt gebogen wurde.

6. Mittelsäule nach einem der Ansprüche 1 bis 5, dadurch gekennzeichnet,
daß von der Fahrzeugaußenseite her ein Zusatzteil auf das Strangprofil (1) aufgesetzt ist, das dieses zumindest teilweise umgreift und abdeckt und mit diesem fest verbunden ist.

7. Mittelsäule nach Anspruch 6, dadurch gekennzeichnet, daß das Zusatzteil ein Blechteil oder Gußteil aus Leichtmetall ist.

8. Mittelsäule nach Anspruch 6 oder 7, dadurch gekennzeichnet, daß das Zusatzteil Freiräume für Anbauteile, insbesondere für Scharniere und Schließbolzen, enthält.

## Claims

1. Centre pillar (B-pillar) on a passenger car bodyshell,
characterised in that
the centre pillar incorporates a multi-compartmental extruded profile (1) made of lightweight metal and with a plurality of profile compartments (3 to 8), which extends the entire length of said pillar,
the profile compartments (3 to 8) are arranged along a common basic profile wall (2),
to give the centre pillar a conical progression and/or to produce cutouts (10), at least one profile compartment (3 to 8) is trimmed, and such trimming retains the basic profile wall (2) as the inner wall of the centre pillar.

2. Centre pillar according to claim 1, characterised in that the profile compartments (3, 4, 5) of the multi-compartmental extruded profile (1) are arranged alongside one another, and to give the centre pillar a conically upwardly tapering progression when viewed from the side of the vehicle, laterally successive profile compartments (3, 4, 5) are trimmed in longitudinally extending steps.

3. Centre pillar according to claim 2, characterised in that the profile compartments (6, 7, 8) of the multi-compartmental extruded profiles (1) are arranged one above the other, and to give the centre pillar a conically upwardly tapering progression when viewed lengthways along the vehicle, profile compartments (6, 7, 8) are trimmed one above the other in longitudinally extending steps.

4. Centre pillar according to any of claims 1 to 3, characterised in that the basic profile wall (2) is a one-walled lateral part (9) which in the manufactured state of the multi-compartmental extruded profile (1) protrudes laterally beyond the region of the profile compartments (3 to 8) and is trimmed so as to taper conically upwards.

5. Centre pillar according to any of claims 1 to 4, characterised in that the multi-compartmental extruded profile (1) is bent after manufacture or trimming.

6. Centre pillar according to any of claims 1 to 5, characterised in that
from the vehicle exterior an ancillary part is set on the extruded profile (1), at least partly surrounds and covers the latter, and is rigidly connected thereto.

7. Centre pillar according to claim 6, characterised in that the ancillary part is a sheet-metal part or casting made of lightweight metal.

8. Centre pillar according to claim 6 or 7, characterised in that the ancillary part contains spaces for fittings, more particularly for hinges and striker pins.

## Revendications

1. Montant médian (pilier B) dans une carrosserie de voiture particulière,
caractérisé
en ce que le montant médian comporte un profilé filé compartimenté (1) en métal léger, qui s'étend sur toute sa longueur et qui contient plusieurs chambres (3 à 8),
en ce que les chambres (3 à 8) du profilé sont disposées sur une paroi de base commune (2) du profilé et
en ce que, pour la fabrication d'un montant médian ayant une allure effilée et/ou pour la formation de découpures (10), au moins une chambre (3 à 8) du profile est rognée, la paroi de base (2) du profilé étant conservée, en tant que paroi interne du montant médian, à l'endroit rogné.

2. Montant médian selon la revendication 1, caractérisé en ce que les chambres (3, 4, 5) du profilé filé compartimenté (1) sont disposées côte à côte et, pour la fabrication d'un montant médian qui, vu du côté de la voiture, a une allure effilée vers le haut, des chambres (3, 4, 5) du profilé qui se suivent latéralement sont rognées par étages dans la dimension longitudinale.

3. Montant médian selon la revendication 2, caractérisé en ce que les chambres (6, 7, 8) du profilé filé compartimenté (1) sont disposés l'un sur l'autre et, pour la fabrication d'un montant médian qui, vu dans la direction longitudinale de la voiture, a une allure effilée vers le haut, des chambres superposés (6, 7, 8), du profilé sont rognées par étages dans la dimension longitudinale.

4. Montant médian selon l'une quelconque des revendications 1 à 3, caractérisé en ce que, dans l'état initial de fabrication du profilé filé compartimenté (1), la paroi de base (2) du profilé fait saillie latéralement au-delà de la région des chambres (3 à 8) du profilé sous forme de partie latérale à une seule paroi (9) et elle est ensuite rognée de manière à se rétrécir vers le haut.

5. Montant médian selon l'une quelconque des revendications 1 à 4, caractérisé en ce que le profilé filé compartimenté (1) est courbé après sa fabrication ou son rognage.

6. Montant médian selon l'une quelconque des revendications, caractérisé en qu'il est posé sur le profilé filé (1), du côté extérieur de la voiture, un élément auxiliaire qui entoure et recouvre au moins en partie ce profilé et qui est fixé rigidement à celui-ci.

7. Montant médian selon la revendication 6, caractérisé en ce que l'élément auxiliaire est une pièce en tôle ou une pièce en fonte de métal léger.

8. Montant médian selon la revendication 6 ou 7, caractérisé en ce que l'élément auxiliaire contient des espaces libres pour des éléments rapportés, en particulier pour des charnières et des éléments de verrouillage de portière.
